(19) Europäisches Patentamt / European Patent Office / Office européen des brevets

(11) **EP 3 413 106 A1**

(12) **DEMANDE DE BREVET EUROPEEN**

(43) Date de publication:
**12.12.2018 Bulletin 2018/50**

(51) Int Cl.:
***G02B 6/00*** (2006.01)   ***F21S 41/00*** (2018.01)

(21) Numéro de dépôt: **18186486.9**

(22) Date de dépôt: **12.09.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2015  FR 1558511**

(62) Numéro(s) de document de la (des) demande(s) initiale(s) en application de l'article 76 CBE:
**16188342.6 / 3 141 806**

(71) Demandeur: **VALEO VISION**
**93012 Bobigny Cedex (FR)**

(72) Inventeur: **LAMINETTE, Maxime**
**49000 Angers (FR)**

(74) Mandataire: **Valeo Vision**
**IP Department**
**34, rue Saint André**
**93012 Bobigny (FR)**

Remarques:
Cette demande a été déposée le 31.07.2018 comme demande divisionnaire de la demande mentionnée sous le code INID 62.

(54) **MODULE LUMINEUX EN MATERIAU TRANSPARENT**

(57)   L'invention a trait à un module lumineux (2), notamment pour véhicule automobile, comprenant un corps (4) en matériau translucide ou transparent avec :
- une face d'entrée (6) de rayons lumineux produits par une ou plusieurs sources lumineuses ;
- une face de sortie (12) des rayons lumineux en un faisceau de sortie ;
- une face de réflexion (8) des rayons lumineux provenant de la face d'entrée, vers la face de sortie (12) ;
- le corps lumineux comprenant au moins deux zones optiques de sortie distinctes.

Fig.2

EP 3 413 106 A1

## Description

L'invention a trait au domaine de l'éclairage, notamment l'éclairage pour véhicule automobile. L'invention a également trait à un projecteur d'éclairage comprenant un tel module.

Le document de brevet publié FR 3 010 772 A1 divulgue un module d'éclairage avec un corps en matériau transparent comprenant une face d'entrée de la lumière produite par une ou plusieurs sources lumineuses, une face de réflexion avec un bord de coupure et une face de sortie des rayons. La face d'entrée comprend une cavité formée à une extrémité du module, dans le matériau transparent, et délimitée par une surface circulaire formant un dioptre apte à dévier les rayons entrant vers la surface extérieure et périphérique du corps. Les rayons sont alors réfléchis sur la surface extérieure, par application du principe de réflexion totale, pour converger vers le bord de coupure. La face de sortie est généralement convexe et est à l'extrémité opposée du module. La face de réflexion est formée par une entaille formée dans une portion latérale du matériau transparent, entre les faces d'entrée et de sortie. L'arête au creux de l'entaille forme le bord de coupure des rayons et la face de l'entaille située du côté de la face d'entrée forme une face de réflexion en vertu du principe de réflexion totale. Cette face de réflexion est couramment appelée « plieuse » en ce qu'elle « replie » une partie des rayons vers le bas du faisceau. Les rayons provenant de la face d'entrée se propagent dans le matériau transparent essentiellement suivant l'axe longitudinal et optique du module. La majeure partie des rayons passe au niveau du bord de coupure sans subir de réflexion et sortent par la face de sortie. Une partie des rayons rencontre la face de réflexion ou plieuse disposée avant le bord de coupure, pour y subir une réflexion vers une portion haute du corps transparent. Ces rayons rencontrent alors la face de sortie avec un angle d'incidence important. Ils y subissent ainsi une réfraction importante et sont dirigés vers une portion basse du faisceau lumineux. C'est ainsi que le bord de la plieuse permet de réaliser une coupure horizontale du faisceau lumineux. Ce module est intéressant en ce qu'il permet de réaliser avec un nombre d'éléments très réduit un faisceau lumineux à coupure performant. Il présente toutefois l'inconvénient qu'il requiert un certain espace suivant l'axe optique. Le corps transparent s'étend en effet selon son axe longitudinal essentiellement suivant l'axe optique du module. De plus, de par sa forme la face de sortie ne peut servir de face de style, c'est-à-dire directement visible depuis l'extérieur du dispositif d'éclairage comprenant le module. Il est donc nécessaire de prévoir une surface supplémentaire de style ce qui augmente également l'encombrement.

L'invention a pour objectif de pallier au moins un problème de l'état de la technique, en l'occurrence de l'état de la technique susmentionné. Plus précisément, l'invention a pour objectif de proposer un module lumineux compact, en particulier suivant son axe optique.

L'invention a pour objet un module lumineux pour véhicule automobile, comprenant un corps en matériau translucide ou transparent avec :

- une face d'entrée de rayons lumineux produits par une ou plusieurs sources lumineuses ;
- une face de sortie des rayons lumineux en un faisceau de sortie ;
- une face de réflexion des rayons lumineux provenant de la face d'entrée, vers la face de sortie ;
- le corps lumineux comprenant au moins deux zones optiques de sortie distinctes.

Suivant des modes particuliers de réalisation, le module comprend l'une ou l'autre des caractéristiques suivantes, prise(s) isolément ou suivant l'une quelconque des combinaisons techniquement possibles :

- l'une des zones optiques de sortie présente une surface optique de sortie de type « cylindrique » ;

- ladite zone optique de sortie de type « cylindrique » produit un faisceau de type « flat » ;

- la face de réflexion est, en regard de la face de sortie de type « cylindrique », de section de type « parabolique » ;

- la face de réflexion est convexe vers l'extérieur ;

- l'une des zones optiques de sortie présente une surface optique de sortie de type « sphérique » ;

- ladite zone optique de sortie de type « sphérique » produit un faisceau de type « kink » (« incliné » en français) ;

- la face de réflexion est, en regard de la face de sortie de type « sphérique », de surface de type « parabolique » ;

- la face de réflexion forme un dioptre apte à réfléchir, par le principe de réflexion totale, une partie des rayons provenant de la face d'entrée ;

- la face de réflexion forme un angle compris entre 5° et 40° avec la direction moyenne des faisceaux lumineux se propageant depuis la face d'entrée jusqu'à ladite face de réflexion;

- un bord de coupure est formé par le corps lumineux, entre la face de réflexion et la face de sortie ;

- le bord de coupure et la face de réflexion sont agencés de telle sorte que les rayons lumineux issus de la face d'entrée et arrivant sur le bord de coupure sont d'abord réfléchis par la face de réflexion ;

- la face d'entrée comprend un ou plusieurs collimateurs aptes à dévier les rayons lumineux d'une ou plusieurs sources lumineuses, respectivement, de manière à former un ou plusieurs faisceaux de rayons dirigés vers la deuxième face de réflexion et passant devant le bord de coupure ;

- le collimateur, ou chacun des collimateurs, est formé par une protubérance du corps avec une surface extérieure circulaire préférentiellement de profil elliptique, ladite protubérance comprenant une cavité apte à recevoir la source lumineuse correspondante ;

- le collimateur ou chacun des collimateurs, est formé par une protubérance du corps, ayant une surface extérieure circulaire de profil elliptique et une cavité apte à recevoir la source lumineuse correspondante ;

- le faisceau de sortie est un faisceau d'éclairage à coupure horizontale ou verticale ;

- le faisceau de sortie est un faisceau d'éclairage de type code.

L'invention a également pour objet un projecteur d'éclairage pour véhicule automobile comprenant un boîtier et au moins un module lumineux, remarquable en ce que le module lumineux est conforme à l'invention.

Les mesures de l'invention sont intéressantes en ce qu'elles permettent de réaliser un module lumineux ayant une bonne efficacité optique.

L'utilisation d'une plieuse dioptrique, à savoir que la première face de réflexion réfléchit les rayons par le principe de réflexion totale, est avantageuse notamment en ce qu'elle rend le module plus tolérant aux défauts de focalisation. En outre, elle évite une métallisation de la face de réflexion. De plus, l'utilisation de plusieurs collimateurs sur la face d'entrée permet de composer le faisceau lumineux et confère ainsi une grande flexibilité pour la réalisation de différentes fonctions. De plus, le module prévoit une face de sortie commune, ce qui présente des avantages en termes d'esthétique et de précision du faisceau total résultant de l'addition des faisceaux produits par les différents collimateurs.

D'autres caractéristiques et avantages de la présente invention seront mieux compris à l'aide de la description et des dessins parmi lesquels :

- La figure 1 est une vue en perspective arrière de dessus d'un corps dioptrique d'un module lumineux selon un aspect de l'invention ;
- La figure 2 est un vue en perspective avant de côté du corps de la figure 1 ;
- La figure 3 est une vue en coupe suivant un plan longitudinal médian du module des figures 1 et 2 ;
- La figure 4 est une autre vue en coupe suivant un plan longitudinal médian du module des figures 1 et 2 .

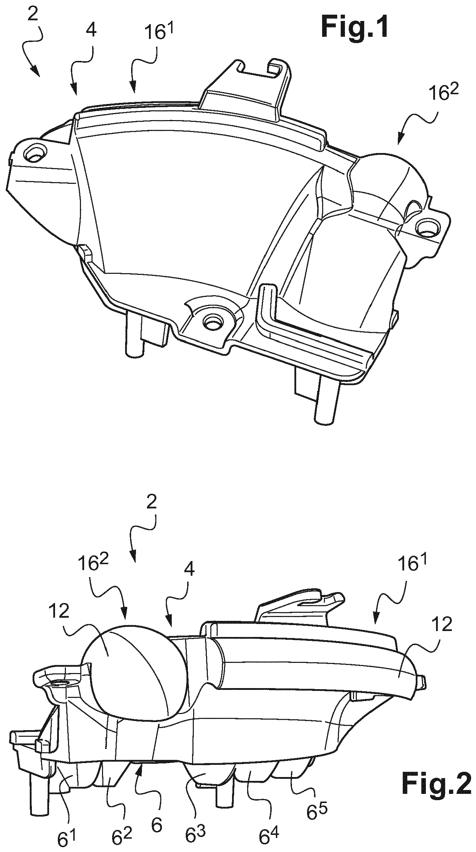

Les figures 1 à 4 illustrent un corps dioptrique d'un module lumineux conforme à l'invention. Le module 2 comprend essentiellement le corps 4 et des sources lumineuses (non représentées).

Le corps 4 est fait majoritairement, préférentiellement totalement, d'un matériau transparent ou translucide. Ce matériau peut être du verre ou préférentiellement du plastique, comme notamment du polycarbonate (PC).

Le corps 4 comprend une face d'entrée 6 pour la lumière produite par les sources lumineuses. Ces dernières peuvent être des diodes à électroluminescence ou encore du type laser. Le corps 4 comprend également une face de réflexion 8, destinée à réfléchir la quasi-totalité des rayons, et une face de sortie.

La face d'entrée 6 peut comprendre des collimateurs $6^1$ à $6^5$. Ils sont davantage visibles sur la figure 2. En l'occurrence, ils peuvent former des protubérances faisant saillie du corps et formant une surface extérieure qui peut être généralement circulaire. Chacune de ces protubérances comprend une cavité destinée à recevoir une des sources lumineuses. La surface intérieure des protubérances délimitant la cavité forme un premier dioptre avec l'air ambiant, provoquant une réfraction des rayons la traversant. La surface extérieure des protubérances forme un deuxième dioptre avec l'air ambiant. En fonction de l'angle d'incidence des rayons la rencontrant, ceux-ci peuvent être réfléchis par le principe de réflexion totale. En effet, en optique géométrique, le phénomène de réflexion totale survient lorsqu'un rayon lumineux arrive sur la surface de séparation de deux milieux d'indices optiques différents avec un angle d'incidence supérieur à une valeur critique : il n'y a alors plus de rayon réfracté transmis et seul subsiste un rayon réfléchi. Cet angle d'incidence limite $\vartheta$ est obtenu par application de la loi de Snell-Decartes, à savoir que $\theta = \sin^{-1}\frac{n_2}{n_1}$, où $n_2$ est l'indice de réfraction de l'air et $n_1$ est l'indice de réfraction du matériau transparent ou translucide formant la protubérance. Pour un matériau comme du polycarbonate d'indice de réfraction de l'ordre 1.591, l'angle limite de réfraction $\vartheta$ est de l'ordre de 39°. La surface extérieure des protubérances formant les deuxièmes dioptres peut présenter un profil parabolique ou elliptique.

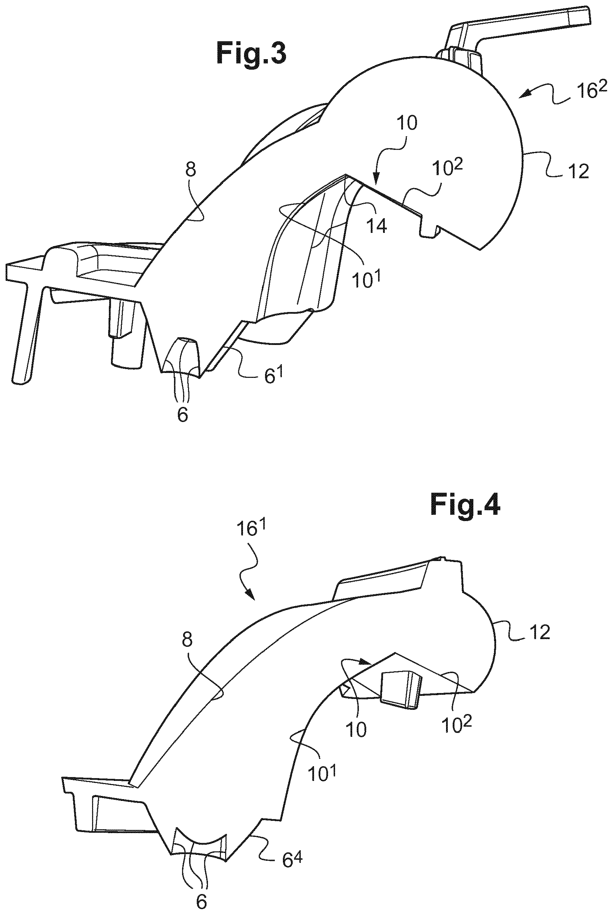

Le corps 4 du module 2 comprend une face inférieure 10 entre la face d'entrée 6 et la face de sortie 12. Comme cela est particulièrement visible aux figures 3 et 4, la face intermédiaire 10 forme un bord de coupure 14 des rayons se propageant dans le corps 4. En effet, la majeure partie des rayons se propagent depuis la face d'entrée 6 vers la face de réflexion 8 où ils sont réfléchis vers la face de sortie 12, avantageusement par le principe de réflexion totale (décrit précédemment en relation avec les protubérances $6^1$ à $6^5$ de la face d'entrée 6). Les rayons passent ensuite au-dessus du bord de coupure, sans subir de réflexion entre la face de réflexion 8 et la face de sortie 12. Or une partie des rayons provenant de la la face de réflexion et de la face d'entrée 4 rencontre la face intermédiaire 10, plus précisément la portion de ladite face qui est à adjacente au bord de coupure 14. Ces rayons sont alors réfléchis.

Du fait de son agencement avec un angle faible par rapport à l'axe des collimateurs 6¹ à 6⁵, la face de réflexion 8 n'a pas besoin de recevoir un traitement réfléchissant. La réflexion des rayons par la face de réflexion 8 a pour effet de renvoyer ces rayons vers une portion supérieure de la face de sortie 12, avec des angles d'incidence importants ayant pour effet de réfracter ces rayons vers une portion basse du faisceau lumineux. La face de réflexion 8, en association avec le bord de coupure, « cache » une partie des rayons dans une portion haute du faisceau lumineux, assurant ainsi une fonction de coupure horizontale du faisceau.

La face de réflexion 8 forme avantageusement un angle compris entre 5° et 40° avec la direction moyenne des faisceaux lumineux se propageant depuis la face d'entrée 4 jusqu'à ladite face de réflexion 8.

Aux figures 3 et 4, on peut observer que la face intermédiaire 10 peut comprendre deux portions 10¹ et 10² adjacentes, ces deux portions formant une arête correspondant au bord de coupure 14.

Le corps 4 présente en outre la particularité de présenter deux groupes optiques 16¹ et 16².

Le groupe optique à droite 16² sur la figure 1 est dédié à la formation d'un faisceau de type « kink », c'est-à-dire adapté à la formation du profil incliné requis par la réglementation pour un faisceau code, lequel est relevé sur le bord. Le groupe optique 16¹ est quant à lui dédié à la formation du faisceau « flat » (« plat » en français).

Dans chacun des deux groupes optiques 16¹ et 16², la face de réflexion 8, la face intermédiaire 10 et surtout la face de sortie 12 ont une forme adaptée au groupe respectif 16¹, 16².

Dans le groupe 16¹, la face de réflexion 8 est de section parabolique, chaque section parabolique ayant un foyer sur le bord de coupure 14. La forme générale de la face de réflexion 8 est en outre concave, ce qui a pour avantage de permettre de distribuer le faisceau horizontalement sur la surface de sortie 12, bien que les sources de lumières soient regroupées par îlots. En variante cependant, la face de réflexion 8 a une forme de tout type adaptée pour mettre en forme les faisceaux lumineux provenant des collimateurs, vers la face de sortie 12. Il s'agit par exemple d'une forme de type elliptique.

La face de sortie 12 présente la particularité d'être de type cylindrique, c'est-à-dire en portion de cylindre, dont la génératrice est courbe dans le cas précis. La face de sortie est donc de section verticale constante. En variante cependant, la face de sortie 12 a une face de sortie de tout type adaptée pour projeter le faisceau lumineux venant de la face de réflexion 8 à l'infini sur la route.

Dans le groupe 16², la face de réflexion 8 est quant à elle de section parabolique ayant pour foyer le bord de coupure 14. En variante cependant, la face de réflexion 8 a une forme de tout type adaptée pour mettre en forme les faisceaux lumineux provenant des collimateurs, vers la face de sortie 12. Il s'agit par exemple d'une forme de type elliptique.

En outre, la face de réflexion 8 a une forme générale parabolique de façon à converger le faisceau vers le plan médian de la face de sortie 12. D'une manière générale, la forme générale de la face de réflexion est adaptée pour converger le faisceau lumineux vers le plan médian de la face de sortie 12.

La face de sortie 12 du groupe 16² présente la particularité d'être de type sphérique, c'est-à-dire issue d'une portion de sphère. En variante, elle a cependant une forme de tout type adapté pour produire un faisceau concentré, de flux élevé.

Comme cela est visible à la figure 2, la face d'entrée 6 peut comprendre plusieurs collimateurs à foyers 6¹ à 6⁵.

En variante, il s'agit de collimateurs de tout type adapté pour produire un faisceau le sensible parallèle.

Les sources lumineuses du ou des modules peuvent être disposées sur un support commun, comme par exemple une platine avec circuit imprimé ou alimentation de type « flex » (« flexible » en français).

Un ou plusieurs modules tels que décrits ci-avant peuvent être intégrés dans un boîtier en vue de réaliser un projecteur.

**Revendications**

1. Module lumineux (2), notamment pour véhicule automobile, comprenant un corps (4) en matériau translucide ou transparent avec :

   - une face d'entrée (6) de rayons lumineux produits par une ou plusieurs sources lumineuses ;
   - une face de sortie (12) des rayons lumineux en un faisceau de sortie ;
   - une face de réflexion (8) des rayons lumineux provenant de la face d'entrée, vers la face de sortie (12) ;
   - le corps lumineux comprenant au moins deux zones optiques de sortie distinctes.

2. Module lumineux (2) suivant la revendication 1, dans lequel l'une des zones optiques de sortie présente une surface optique de sortie de type « cylindrique ».

3. Module lumineux (2) suivant la revendication précédente, dans lequel ladite zone optique de sortie de type « cylindrique » produit un faisceau de type « plat » (« flat »).

**4.** Module lumineux selon l'une des revendications 2 ou 3, dans lequel la face de réflexion est, en regard de la face de sortie de type « cylindrique », de section de type « parabolique ».

**5.** Module lumineux selon la revendication précédente, dans lequel la face de réflexion est de forme générale concave.

**6.** Module lumineux (2) suivant l'une quelconque des revendications précédentes, dans lequel l'une des zones optiques de sortie présente une surface optique de sortie de type « sphérique ».

**7.** Module lumineux (2) suivant la revendication précédente, dans lequel ladite zone optique de sortie de type « sphérique » produit un faisceau de type « incliné » (« kink »).

**8.** Module lumineux (2) suivant l'une quelconque des revendications précédentes, dans lequel la face de réflexion est, en regard de la face de sortie de type « sphérique », de section de type « parabolique ».

**9.** Module lumineux selon la revendication précédente, dans lequel la face de réflexion a une forme générale parabolique.

**10.** Module lumineux selon l'une quelconque des revendications précédentes, dans lequel la face de réflexion (8) forme un dioptre apte à réfléchir, par le principe de réflexion totale, une partie des rayons provenant de la face d'entrée (6).

**11.** Module lumineux (2) suivant l'une quelconque des revendications précédentes, dans lequel la face de réflexion (8) forme un angle compris entre 5° et 40° avec la direction moyenne des faisceaux lumineux se propageant depuis la face d'entrée (6) jusqu'à ladite face de réflexion (8).

**12.** Module lumineux (2) suivant l'une des revendications précédentes, dans lequel un bord de coupure (14) est formé par le corps lumineux, entre la face de réflexion et la face de sortie.

**13.** Module lumineux (2) suivant la revendication précédente, dans lequel le bord de coupure et la face de réflexion sont agencés de telle sorte que les rayons lumineux issus de la face d'entrée et arrivant sur le bord de coupure sont d'abord réfléchis par la face de réflexion.

**14.** Module lumineux (2) suivant l'une des revendications précédentes, dans lequel la face d'entrée (6) comprend un ou plusieurs collimateurs (6²) aptes à dévier les rayons lumineux d'une ou plusieurs sources lumineuses, respectivement, de manière à former un ou plusieurs faisceaux de rayons dirigés vers la deuxième face de réflexion (10) et passant devant le bord de coupure (14).

**15.** Module lumineux (2) suivant la revendication précédente, dans lequel le collimateur, ou chacun des collimateurs (6²), est formé par une protubérance du corps avec une surface extérieure circulaire préférentiellement de profil elliptique, ladite protubérance comprenant une cavité apte à recevoir la source lumineuse correspondante.

**16.** Module lumineux (2) suivant la revendication 14, **caractérisé en ce que** le collimateur ou chacun des collimateurs (6¹), est formé par une protubérance du corps, ayant une surface extérieure circulaire de profil elliptique et une cavité apte à recevoir la source lumineuse correspondante.

**17.** Module lumineux (2) suivant l'une des revendications 1 à 15, dans lequel le faisceau de sortie est un faisceau d'éclairage à coupure horizontale ou verticale.

**18.** Module lumineux (2) suivant la revendication précédente, dans lequel le faisceau de sortie est un faisceau d'éclairage de type code.

**19.** Projecteur d'éclairage pour véhicule automobile comprenant un boîtier et au moins un module lumineux, dans lequel le module lumineux (2) est conforme à l'une des revendications 1 à 17.

Fig.1

Fig.2

# Fig.3

# Fig.4

Europäisches
Patentamt

European
Patent Office

Office européen
des brevets

**RAPPORT DE RECHERCHE EUROPEENNE**

Numéro de la demande

EP 18 18 6486

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2008 045765 A1 (HELLA KGAA HUECK & CO [DE]) 11 mars 2010 (2010-03-11)<br><br>* alinéa [0020] - alinéa [0032] *<br>* figures 1-7 *<br>----- | 1-3,6,7, 10-12, 17-19 | INV.<br>G02B6/00<br>F21S41/00 |
| X | US 2004/156209 A1 (ISHIDA HIROYUKI [JP]) 12 août 2004 (2004-08-12)<br>* alinéa [0032] - alinéa [0087] *<br>* figures 8-10 *<br>----- | 1,6-13, 17-19 | |
| X | EP 2 194 310 A2 (HARISON TOSHIBA LIGHTING CORP [JP]) 9 juin 2010 (2010-06-09)<br>* alinéa [0010] - alinéa [0042] *<br>* figures 1-17 *<br>----- | 1-5,10, 11,17-19 | |

DOMAINES TECHNIQUES
RECHERCHES (IPC)

F21S
G02B

Le présent rapport a été établi pour toutes les revendications

| Lieu de la recherche | Date d'achèvement de la recherche | Examinateur |
|---|---|---|
| La Haye | 5 septembre 2018 | Blokland, Russell |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 18 6486

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2018

| Document brevet cité au rapport de recherche | Date de publication | Membre(s) de la famille de brevet(s) | Date de publication |
|---|---|---|---|
| DE 102008045765 A1 | 11-03-2010 | AUCUN | |
| US 2004156209 A1 | 12-08-2004 | CN 1523261 A | 25-08-2004 |
| | | DE 102004005931 A1 | 26-08-2004 |
| | | FR 2851030 A1 | 13-08-2004 |
| | | FR 2855247 A1 | 26-11-2004 |
| | | GB 2399622 A | 22-09-2004 |
| | | JP 4047186 B2 | 13-02-2008 |
| | | JP 2004241349 A | 26-08-2004 |
| | | KR 20040073316 A | 19-08-2004 |
| | | US 2004156209 A1 | 12-08-2004 |
| EP 2194310 A2 | 09-06-2010 | EP 2194310 A2 | 09-06-2010 |
| | | US 2010135036 A1 | 03-06-2010 |

EPO FORM P0460

Pour tout renseignement concernant cette annexe : voir Journal Officiel de l'Office européen des brevets, No.12/82

**EP 3 413 106 A1**

**RÉFÉRENCES CITÉES DANS LA DESCRIPTION**

**Documents brevets cités dans la description**

- FR 3010772 A1